# EUROPÄISCHE PATENTSCHRIFT

(11) **EP 0 489 289 B1**
(45) Veröffentlichungstag und Bekanntmachung des Hinweises auf die Patenterteilung: **04.05.1994**
(21) Anmeldenummer: 91119455.3
(22) Anmeldetag: 14.11.1991
(51) Int. Cl.: F16L 19/12

(54) **Verbindungssystem**
Connection system
Système d'assemblage

(30) Priorität: 03.12.1990 DE 4038539
(43) Veröffentlichungstag der Anmeldung: 10.06.1992
(73) Patentinhaber: Parker Hannifin GmbH, Geschäftsbereich ERMETO, 33659 Bielefeld (DE)
(72) Erfinder: Behrens, Günter, W-4815 Schloss Holte (DE); Ehrke, Dieter, W-4803 Steinhagen (DE)
(74) Vertreter: Linser, Heinz

(56) Entgegenhaltungen:
- GB-A- 831 127
- GB-A- 2 080 900
- US-A- 2 687 315
- US-A- 3 441 297
- US-A- 4 630 851

## Beschreibung

Die Erfindung betrifft ein Verbindungssystem für höchstdruckfeste Rohrverschraubungen mit einem genormten, einen 24 Grad Anschluß aufweisenden Aufnahmekörper, einer überwurfmutter zur Herstellung einer druckfesten Verbindung, einem Rohr oder einem Anschlußzapfen zum Verbinden anderer Systemkomponenten und einem zweiteiligen Ring, wobei der eine Ring als Schneid- oder Klemmring und der andere als Dichtelement ausgebildet ist.

Zur Herstellung eines Verbindungssystems für druckfeste Rohrverschraubungen ist es bekannt, zweiteilige Ringe zu verwenden, welche als Schneid- und/oder Klemmringe wirken. So geht beispielsweise aus der DIN 4000 Teil 36, Ziffer 13, ein Doppelkeilring hervor, welcher aus zwei getrennten Keil- oder Klemmringen besteht, die beim Montagevorgang in sich zeitlich überlappender Weise zur Einwirkung kommen. Hierdurch ist für den Monteur keine eindeutige Feststellung des Montageendes möglich, wodurch Fehlmontagen nicht auszuschließen sind. Es erfordert zumindest eine große Erfahrung des Monteurs über das Kräfteverhalten des Verbindungssystems bei der Montage, um Fehlmontagen zu vermindern oder auszuschließen.

Aus der DE-PS 12 53 531 ist eine Rohrmuffenverschraubung bekannt, welche zwei hintereinandergeschaltete Quetschringe aufweist, die mittels einer Überwurfmutter zum Eingraben in den Mantel des Rohres, den sie umgeben, gebracht werden. Auch hierbei ergeben sich die oben aufgeführten Probleme bei der Montage, da sich die Kräfte, welche auf die beiden Ringe einwirken, überlappen, wodurch der Montagezustand nicht eindeutig feststellbar ist und erhebliche Montagekräfte erforderlich sind, die bereits zur Überwindung von Reibungskräften aufgebracht werden müssen.

Aus der US-A-2687315 ist ein Verbindungssystem zur Herstellung einer Rohrverbindung bekannt, welches mit einem Schneidring und einem metallischen Dichtelement versehen ist. Das Dichtelement weist einen Konus auf, welcher zur Führung des Schneidkopfes des Schneidringes ausgebildet ist. Ein weiteres Zusammenwirken dieser beiden Elemente ist nicht vorgesehen, insbesondere ist keine Aufteilung zwischen der Halte- und Dichtfunktion vorgesehen. Dem Monteur wird kein steiler Kraftanstieg als Zeichen einer fertigen Montage vermittelt.

Die Erfindung hat sich die Aufgabe gestellt, diese Nachteile zu vermeiden und ein Verbindungssystem unter Verwendung genormter Verbindungs- und Schraubelemente vorzuschlagen, bei dem die Montagekräfte gegenüber dem Stand der Technik bei genormten Schneidringverbindungen mit 24 Grad Konus erheblich vermindert sind, die Vor- und Fertigmontage von Schneidringverschraubungen und das Fein- und Höchstdruckdichtverhalten im Vergleich zu herkömmlichen Schneidringverbindungen erheblich verbessert wird.

Die Lösung dieser Aufgabe erfolgt gemäß der Erfindung dadurch, daß bei dem eingangs genannten Verbindungssystem das Dichtelement dem Aufnahmekörper zugeordnet und dem Halteelement vorgelagert ist, und im montierten Zustand mit einer radial zu seiner Ringachse verlaufenden Anschlagfläche an der inneren Ringfläche des Aufnahmekörpers anliegt und sich mindestens über einen Teil der inneren Kegelfläche [Konus] des Aufnahmekörpers erstreckt und für das Halteelement eine konisch verlaufende Gleitfläche und eine radial zur Rohr- oder Ringachse sich erstreckende Anschlagfläche aufweist, wobei das Halteelement eine mit der hinteren Anschlagfläche des Dichtelements im fertig montierten Zustand zusammenwirkende Anschlagfläche aufweist.

Der Erfindung liegt die Erkenntnis zugrunde, daß die funktionelle Trennung eines zweiteiligen Ringes in ein Halteelement und in ein Dichtelement eine Reihe von Aufgaben löst, da sich durch die funktionelle Trennung die Möglichkeit ergibt, jedes Element für seine Aufgabe maximal auszugestalten, wie im folgenden noch gezeigt wird.

So ist es vorteilhaft und in einfacher Weise technisch möglich, die Gleitfläche des Dichtelements als Konus auszubilden und seine Oberfläche so zu behandeln, daß die bei der Montage entstehende Reibung zwischen Halte- und Dichtelement verringert wird.

Nach einer Ausführungsform der Erfindung weist das aus Metall bestehende Dichtelement an dem Teil, der sich mindestens über einen Bereich der inneren Kegelfläche des Aufnahmekörpers erstreckt, eine metallische Dichtlippe auf. Diese Ausführungsform eignet sich besonders für den Einsatz des Verbindungssystems für höhere Temperaturen und für aggressive Medien, wo keine Elastomere einsetzbar sind. Ist ein solcher Einsatz nicht beabsichtigt, so ist dem Dichtelement im montierten Zustand ein Elastomerdichtring vorgelagert, wodurch eine hohe Dichtigkeit erreicht wird.

Besonders für Montagezwecke ist es vorteilhaft, den Elastomerdichtring mit dem Dichtelement zu verbinden. Eine solche Verbindung zwischen dem Elastomerdichtring und dem Dichtelement kann durch Anvulkanisierung oder Klebung erfolgen.

Besonders für die Kraftcharakteristik während des Montageverlaufs ist es nach der Erfindung vorteilhaft, daß das Halteelement eine mit der hinteren Anschlagkante des Dichtelements im fertig montierten Zustand zusammenwirkende Anschlagkante aufweist, wie im Zusammenhang mit der Zeichnungsbeschreibung und dem Montageablauf näher erläutert wird.

In einer weiteren Ausführungsform der Erfindung ist das Halteelement als Schneidring mit zwei Schneiden (Progressivring) ausgebildet, wobei sich die durch den Progressivring ergebenden Vorteile mit denen des Dichtelements vorteilhaft ergänzen.

In einer weiteren Ausführungform der Erfindung ist das Haltelement als Zwei-Kanten-Klemmring ausgebildet.

Für die Vereinfachung der Handhabung der einzelnen Elemente bei der Montage ist es von Vorteil, das Dichtelement mit dem Halteelement im Anlieferungszustand zu verbinden.

Hierdurch wird die Zahl der zu verwendenden Teile gegenüber zweiteiligen Klemmverbindern verringert und eine Fehlmontage durch Vertauschen anders dimensionierter Elemente ausgeschlossen.

Die Verbindung der beiden Elemente erfolgt durch Preßpassung oder auch durch Klebung, wobei der Kleber ein bei der Montage freisetzbares Schmiermittel enthält. Durch diese Maßnahme wird ein Schmiermittel zur passenden Zeit in richtiger Menge an die richtige Stelle im Verschraubungssystem gebracht.

Eine weitere Maßnahme nach der Erfindung zur Verringerung der Teilezahl für die Montage besteht darin, daß am Außendurchmesser des Dichtelements eine durchgehende oder unterbrochene Wulst aus einem vulkanisierten Elastomer aufgetragen ist. Hierdurch ist es möglich, den zweiteiligen Ring mit seinem Dichtungsring in der Überwurfmutter vormontiert unterzubringen. Eine solche Vormontage kann fabrikmäßig erfolgen, so daß Montagefehler durch Verwechselungen ausgeschlossen sind und die Montagezeit erheblich verkürzt wird.

Die Verbindung des zweiteiligen Ringes mit der Überwurfmutter kann nach einer weiteren Ausführungsform auch dadurch erfolgen, daß das Haltelement mit einer Verlängerung versehen ist, die sich durch den Boden der Überwurfmutter erstreckt und am äußeren Ende mit der Überwurfmutter verklemmt ist.

Weitere Verbindungsmöglichkeiten ergeben sich dadurch, daß das Halteelement mit der Mutter verklebt ist, wobei der Kleber ein bei der Montage freisetzbares Schmiermittel enthält.

Die Erfindung wird anhand der Zeichnungen näher beschrieben. Hierbei zeigen:
- FIGUR 1: einen Teillängsschnitt und eine Teilansicht eines Verbindungssystems im montierten Zustand mit einem elastomeren Dichtsegment;
- FIGUR 2: eine Explosionsdarstellung der einzelnen Verbindungselemente vor der Montage;
- FIGUR 3: eine Explosionsdarstellung nach der Montage und erfolgter Demontage;
- FIGUR 4: einen Teillängsschnitt und eine Teilansicht eines Verbindungssystems im montierten Zustand nach Figur 1, jedoch mit einer metallischen Ausführungsform eines Dichtelements;
- FIGUR 5: einen Teillängsschnitt und eine Teilansicht eines Verbindungssystems im montierten Zustand nach Figur 1, mit einer Ausführungsform eines Halteelements als Progressivring;
- FIGUR 6: einen Teillängsschnitt und eine Teilansicht eines Verbindungssystems im montierten Zustand nach Figur 1, mit einer Ausführungsform eines Halteelements als Zei-Kanten Klemmring;
- FIGUR 7: einen Teilschnitt einer Überwurfmutter mit integriertem zweiteiligen Ring und einer Wulst zur Zentrierung und Befestigung im Anlieferungszustand;
- FIGUR 8: einen Teilschnitt einer Überwurfmutter mit integriertem zweiteiligem Ring und einem verlängerten Halteelement zur Zentrierung und Befestigung im Anlieferungszustand;
- FIGUR 9: einen Teilschnitt einer Überwurfmutter mit integriertem zweiteiligem Ring und einem mit der Überwurfmutter verklebtem Halteelement zur Zentrierung und Befestigung im Anlieferungszustand;
- FIGUR 10: einen Längsschnitt eines zweiteiligen Ringes im Preßsitz mit anvulkanisiertem Elastomerring;
- FIGUR 11: eine graphische Darstellung einer Direktmontage und
- FIGUR 12: eine graphische Darstellung einer Fertigmontage.

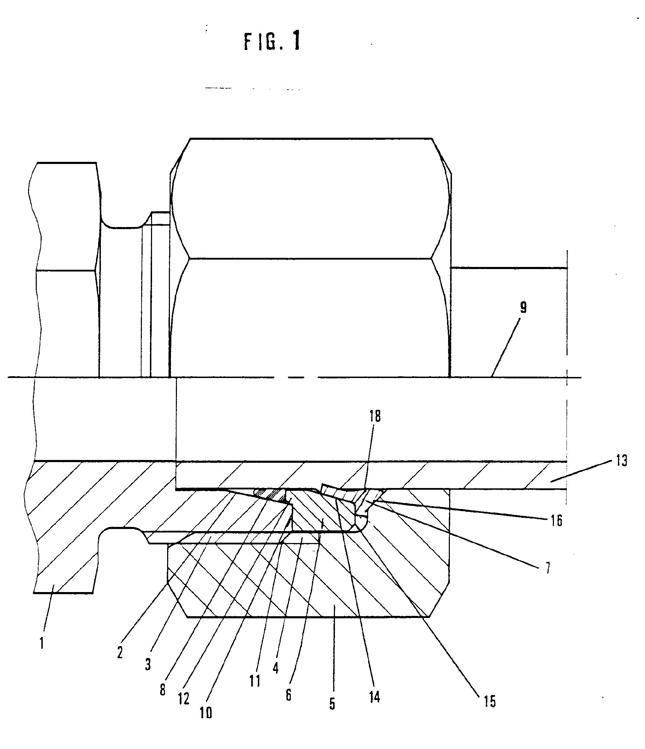

Die Figur 1 zeigt das Verbindungssystem im verschraubten Zustand in einer Teilseitenansicht und im Teillängsschnitt.

Der Aufnahmekörper oder Verschraubungsstutzen 1 weist einen 24 Grad Konus 2 nach DIN 3861 bzw. ISO 8434 auf und ist mit einem Außengewinde 3 versehen, auf das das Innengewinde 4 der Überwurfmutter 5 bei der Montage geschraubt wird. Auch die Überwurfmutter 5 ist im vorliegenden Fall nach DIN 3870 genormt.

Der im montierten Zustand zwischen der Überwurfmutter und dem Verschraubungsstutzen liegende zweiteilige Ring besteht aus dem Dichtelement 6 und dem Halteelement 7, wodurch die Dichtfunktion von der Haltefunktion getrennt wird. Vor dem Dichtelement 6 ist eine Elastomerdichtung 8 anvulkanisiert. Es ist auch möglich anstelle des Elastomerringes 8 einen O-Ring lose einzulegen, welcher im 24 Grad Konus 2 dichtet.

Das Dichtelement 6 liegt in dem dargestellten montierten Zustand mit seiner radial zu seiner Ringachse 9 verlaufenden Anschlagfläche 10 an der Ringfläche 11 des Aufnahmekörpers 1 an. Eine Nase 12 erstreckt sich über einen Teil der inneren Kegelfläche (Konus 2) des Aufnahmekörpers 1. Auf seiner der Rohrwandung 13 zugekehrten Seite ist das Dichtelement 6 mit einer konisch verlaufenden Gleitfläche 14 versehen, die in eine radial zur Rohrachse 9 sich erstreckende Anschlagfläche 15 übergeht.

Die Gleitfläche 14 ist als Gleitfläche für das Halteelement 7, das während des Montagevorganges auf dieser Fläche gleitet, optimiert. Dies kann durch einen besonderen Polier- oder Härtevorgang oder durch eine spezielle Beschichtung erfolgen. Hierdurch ist es möglich die Reibung und damit das für den Montagevorgang aufzubringende Drehmoment der Überwurfmutter erheblich zu reduzieren.

Bei den bekannten Schneidringverschraubungen kann eine Optimierung der Konusfläche nur durch Behandlung des ganzen Verschraubungsstutzens oder durch eine kostenintensive partielle Behandlung der Konen erreicht werden.

Das Halteelement 7 ist bei diesem Ausführungsbeispiel als Schneidring mit einer Schneide ausgebildet und übt eine sekundäre Dichtfunktion aus.

Das Halteelement bzw. der Schneidring 7 ist als federelastisches Element ausgelegt, so daß er im hinteren Teil das Rohr 13 beklemmt und auf diese Weise Dämpfungseigenschaften ausübt. Durch die Anordnung des Halteelementes 7 im hinteren, der inneren Kontaktfläche 16 der Überwurfmutter zugeordneten Bereich, ergibt sich im Vergleich zu den bekannten Schneidringverschraubungen ein vergrößertes Abschervolumen vor dem Einschnitt in den Rohrmantel 13, wodurch eine erhöhte Sicherheit gegen ein Herausreißen des Rohres erreicht wird.

Die Figur 1 zeigt das Verbindungssystem in einem Zustand der vollständigen Endmontage. Dies ist daran er-kennbar, daß der axiale Spalt 20 zwischen der Anschlagfläche 18 des Halteelements 7 und der radialen Stoßfläche 15 des Dicht- elements 6 im montierten Zustand ganz geschlossen ist.

Durch eine entsprechende Auslegung der axialen Anschlagflächen 18 und 15 steigt das Drehmoment am Ende der vorschriftsmäßigen Montage steil an, wodurch eine Übermontage wirksam verhindert wird (Blockmontage).

Damit ist eine optische Montagekontrolle ohne zusätzliche Werkzeuge möglich. Wenn der Spalt 20 zwischen Dicht- und Halteelement 6 und 7 geschlossen ist, ist die Montage funktionssicher abgeschlossen und für höchstdruckbeanspruchte Verbindungen brauchbar. Bei diesem Ausführungsbeispiel ist das Halteelement 7 als Schneidring mit einer Schneide ausgebildet.

Dem Monteur wird hierdurch eine klare optische Überprüfbarkeit seiner Montage ermöglicht.

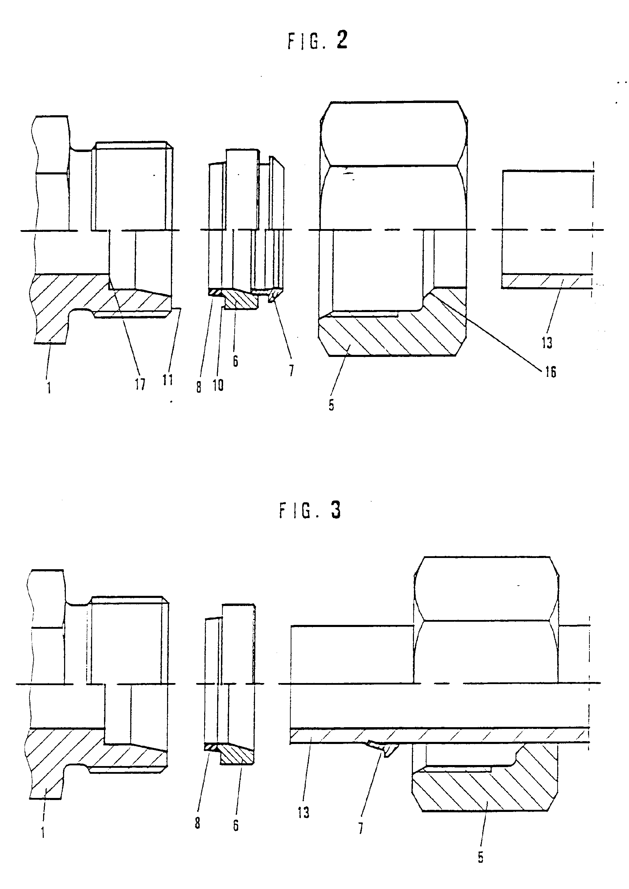

Die Figur 2 zeigt die einzelen Funktionselemente der Rohrverbindung vor der Montage in einer Explosionsdarstellung.

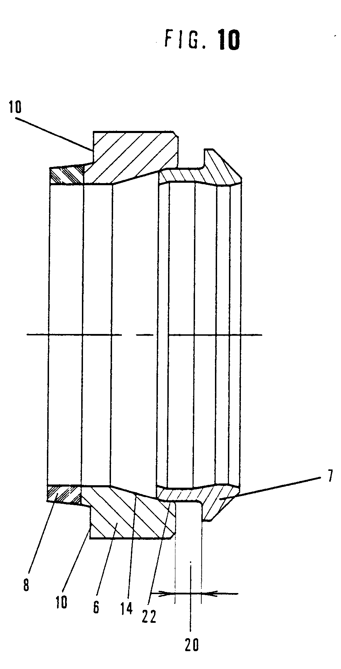

Hierbei ist das Halteelement 7 mit dem Dichtelement 6 bereits vor der Montage verpreßt und der Elastomerring ist mit dem Dichtelement 6 verklebt oder an das Dichtelement anvulkanisiert. Hierdurch wird erreicht, daß anstelle der drei getrennten Elemente nur ein einziges Funktionselement zu handhaben ist. Für die Montage wird das Rohr 13 durch die Überwurfmutter 5, Halteelement 7, Dichtelement 6 und Elastomerring 8 in den Verschraubungsstutzen bis zu seinem Anschlag 17 geführt. Wird die Überwurfmutter 5 angezogen, so stößt die innere Kontaktfläche 16 gegen das Halteelement 7, welches das Dichtelement 6 mit seiner Anschlagfläche 10 gegen die innere Ringfläche 11 stößt. Der weitere Einschneidvorgang wird anhand der Figur 10 und den graphischen Darstellungen 11 und 12 genauer beschrieben.

Wird das Verbindungssystem nach einer festen Endmontage wieder gelöst, so ergibt sich ein Zustand, welcher durch die Figur 3 beschrieben wird.

Nach dem Lösen der montierten Verschraubung ist das Halteelement 7 unlösbar mit dem Rohr 13 verbunden, während das Dichtelement 6 voll beweglich und somit austauschbar ist.

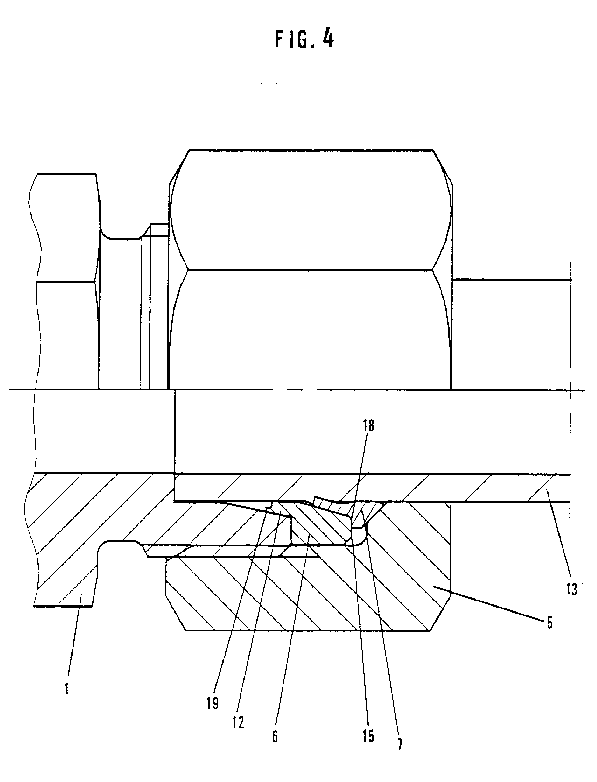

Die Figur 4 zeigt eine weitere Ausführungsform der Erfindung in einer ähnlichen Darstellung wie in Figur 1. Das Dichtelement 6 weist an seiner Nase 12 eine Dichtlippe 19 auf, die auf den Konus 2 gepreßt wird. Um dies zu erreichen, ist die Nase 12 geringfügig länger als bei der Ausführungsform nach Figur 1 ausgebildet. Dadurch erfolgt eine Klemmwirkung zwischen Rohr 13 und Konus 2. Das Dichtelement 6 weist daher keine Elastomerdichtung auf. Es erfolgt dafür eine rein metallische Dichtung, welche für höhere Temperaturen und aggressive Medien besonders geeignet ist, bei denen keine Elastomere einsetzbar sind.

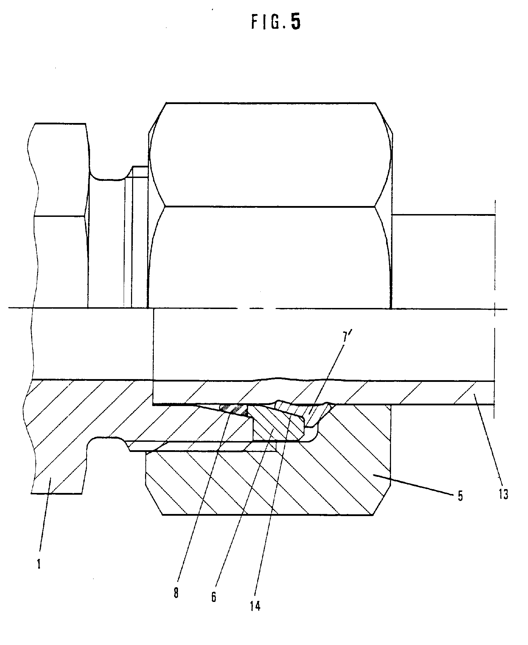

In dem weiteren Ausführungsbeispiel nach Figur 5 ist das Halteelement 7' als ein Schneidring mit zwei Schneiden (Progressivring) ausgebildet, der in vorteilhafter Weise das Rohr 13 auf der gesamten Länge des Konus 14 verklemmt. Das Halteelement 7' wird durch die als Konus am Dichtelement 6 ausgebildete Gleitfläche 14 bei der Montage in radialer Richtung verformt und schneidet in das Rohr 13 ein. Durch die an sich bekannte Ausbildungsform des Schneidringes als Progressivring wird die Haltekraft erheblich erhöht, wodurch nochmals eine höhere Druckbelastbarkeit des Verbindungssystems gegeben ist.

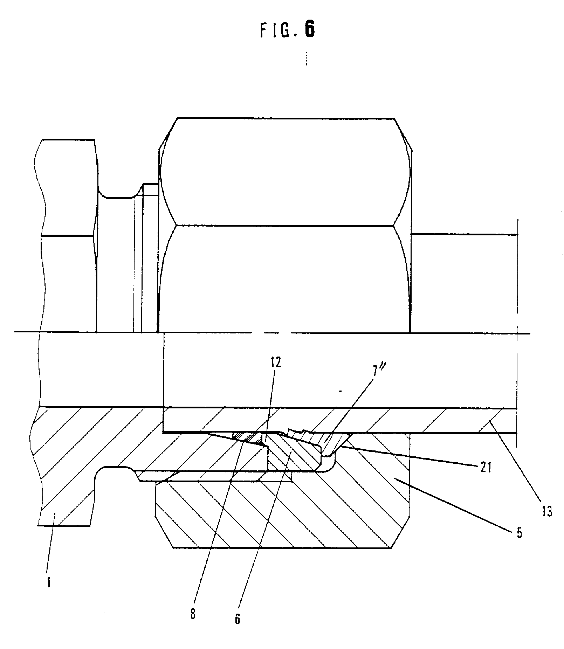

Figur 6 zeigt ein Ausführungsbeispiel, bei dem anstelle eines Schneidringes 7'ein Klemmring 7'' mit zwei Kanten verwendet wird. Weil kein Einschnitt in den Rohrmantel erfolgt, wird das Rohr 13 ebenfalls in radialer Richtung verformt. Im hinteren Bereich erfolgt die Klemmung des Halteelementes durch die 45 Grad Schräge 21 in der genormten Überwurfmutter 5. Der große Vorteil dieser geometrischen Ausbildung des Halteelementes 7'' sind die 2gegenüber herkömmlichen Scheidringverbindungen reduzierten Montagekräfte.

Die Figur 10 zeigt eine vergrößerte Darstellung des mit dem Dichtelement 6 verpreßten Halteelements 7. Der Elastomerring 8 ist auf das Dichtelement aufvulkanisiert.

Der Konus bzw. das Anlaufstück der Gleitfläche 14 des Dichtelements 6 weist einen zylindrischen Ansatz 22 auf, der kleiner als der zugehörige Durchmesser des Halteelementes 7 ist, so daß eine Preßpassung erfolgen kann.

Eine weitere Möglichkeit ist das Verkleben des Halteelementes 7 im Konus 14 des Dichtelements 6. Der Kleber ist so gewählt, daß er während der Montage aufbricht und ein Schmiermittel freigibt, daß die Gleitfläche benetzt.

Ein weiterer Vorteil dieser Vormontage der einzelnen Elemente besteht darin, daß die Schneidkanten des Halteelements 7 gegen äußere Beschädigungen durch die Überdeckung des Dichtelements geschützt werden.

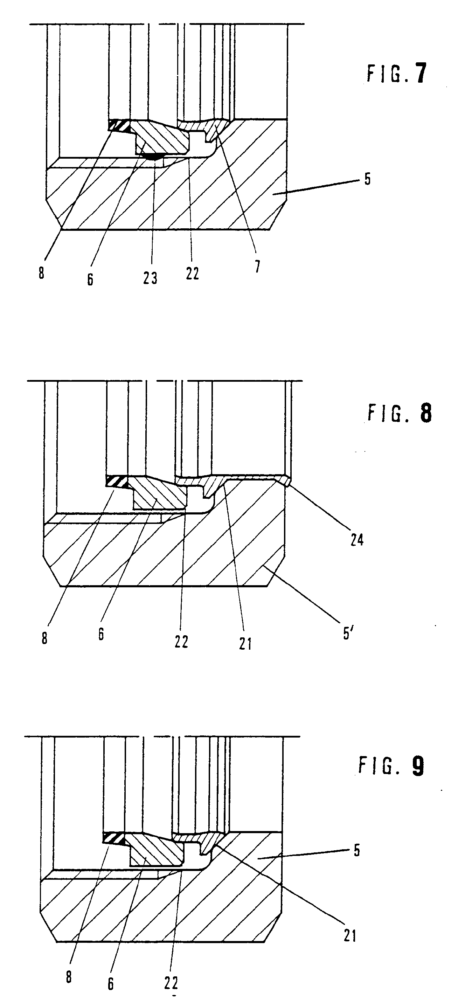

Die Figuren 7, 8 und 9 zeigen sogenannte Funktionsmuttern 5' mit integrierten Dicht- und Halteelementen 6 und 7 der zuvor beschriebenen Art.

In allen drei Fällen ist das Dichtelement 6 mit dem Halteelement 7 verpreßt und mit diesem in geeigneter Weise mit der Überwurfmutter 5 befestigt, so daß nur ein einziges Element in Form der Überwurfmutter zu handhaben ist, wodurch die Montage vereinfacht wird und Fehlermöglichkeiten nochmals verringert werden.

Eine Möglichkeit der Verbindung besteht darin, einen Wulst 23 aus vulkanisiertem Elastomer am Außendurchmesser des Dichtelementes 6 anzubringen. Der Wulst 23 verklemmt sich im Innengewinde der Überwurfmutter 5, wodurch die Montage jedoch nicht behindert wird.

Eine weitere Möglichkeit der Befestigung des Halteelements 7 und damit auch des Dichtelements 6 in der Überwurfmutter 5' geht aus Figur 8 hervor und besteht darin, das Halteelement 7 derart zu verlängern, daß es durch den Boden der Mutter durchgeführt und außen verstemmt (Kante 24) werden kann, so daß es in der Mutter drehbar festgehalten wird. Bei der Demontage legt sich die verstemmte Kante um, so daß ein zurückschieben der Mutter gewährleistet ist.

Die Figur 9 zeigt eine weitere Möglichkeit der Befestigung des Halteelements 7 in der Überwurfmutter 5. Diese besteht darin, daß das Halteelement 7 mit der Mutter 5 verklebt wird. Der Kleber wird dabei so gewählt, daß er während der Montage aufbricht und ein Schmiermittel freigibt, daß die Reibung zwischen Mutter 5 und Halteelement 7 verringert.

In allen diesen Fällen ergibt sich der große Vorteil, daß bei der Montage nur noch eine Funktionsmutter gehandhabt werden muß.

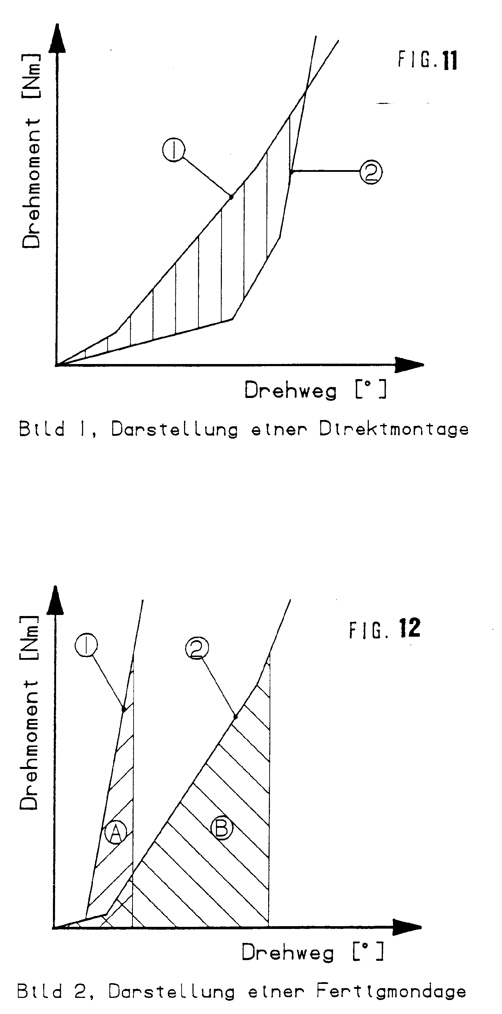

Die Figuren 11 und 12 geben Darstellungen einer Direktmontage im Verbindungsstutzen (Figur 11) und einer Fertigmontage einer bereits vormontierten Verbindung (Figur 12) wieder.

Die Diagramme stellen den Montageverlauf von Rohrverbindungen dar, wobei das Drehmoment über dem Drehweg aufgetragen ist. In Figur 11 wird der Montageverlauf zweier Rohrverbindungen verglichen. Hierbei zeigt die Kurve 1 den Verlauf einer allgemein gebräuchlichen Schneidring-Rohrverbindung. Das Drehmoment steigt von Beginn der Montage kontinierlich an und ein deutliches Ende ist für den Monteur nicht erkennbar.

Die Kurve 2 gibt den Verlauf der Rohrverbindungssystems nach der Erfindung wieder. Hierbei steigt das Drehmoment zu Beginn der Montage schwächer als beim Stand der Technik an. Zum Ende der Montage steigt das Drehmoment sehr steil an, da in diesem Bereich der Spalt 20 zwischen den axialen Anschlagflächen 15 und 18 sich schließt. Dieser starke Anstieg des Drehmoments ist unverkennbar und er zeigt dem Monteur das vollständige Ende der Montage an, wodurch Übermontagen verhindert werden. Am Kreuzungspunkt der Kurven ist die Montage in beiden Fällen beendet. Die Fläche unter den Kurven ist jeweils ein Maß für die geleistete Montagearbeit. Das Diagramm zeigt deutlich, daß die geleistete Arbeit bei der Kurve 2 deutlich geringer ist. Die schraffierte Fläche ist die Differenz der Flächen der Kurve 1 und 2. Sie stellt die Arbeitsersparnis bei der Montage der Rohrverschraubung gemäß der Erfindung gegenüber dem Stand der Technik dar.

Die Figur 12 zeigt den Montageverlauf einer bereits gemäß der Erfindung vormontierten Rohrverbindung, die fertig montiert wird. {(Kurve 1) im Vergleich zu einer bekannten Schneidringverbindung (Kurve 2)}. Nach sehr kurzem, flachen Anstieg steigt das Drehmoment stark an, da der Spalt 20 zwischen den axialen Anschlagflächen 15 und 18 bei der erneuten Montage sofort geschlossen wird.

Der große Vorteil des nach der Erfindung beschriebenen Verbindungssystems gegenüber der bekannten Schneidringverbindung besteht u. a. darin, daß aufgrund der aufgeteilten Dicht- und Haltefunktion eine Vormontage durchgeführt werden kann, die einer im Sinne der Schneidringverschraubung fertigen Montage entspricht. Hierdurch wird erreicht, daß durch die gemäß der Erfindung vorgeschlagene Rohrverbindung, besonders im Hinblick auf Serienmontagen, eine erhebliche Arbeits- und Zeitersparnis gegenüber der herkömmlichen Schneidringverschraubung erzielt wird.

Zur Verdeutlichung dieses Sachverhalts zeigt die Fläche
A. die zu leistende Arbeit für die Fertigmontage der vorgeschlagenen Rohrverschraubung nach der Erfindung und
B. die zu leistende Arbeit für die Fertigmontage einer herkömmlichen Schneidringverschraubung.

### ZUSAMMENSTELLUNG DER BEZUGSZEICHEN

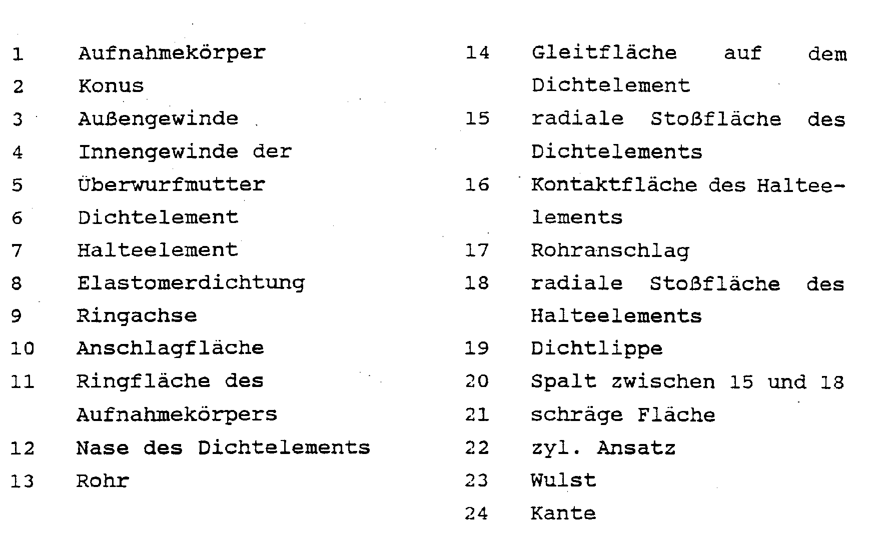

## Patentansprüche

1. Verbindungssystem für höchstdruckfeste Rohrverschraubungen mit einem genormten, einen 24 Grad Anschluß aufweisenden Aufnahmekörper, einer Überwurfmutter zur Herstellung einer druckfesten Verbindung, einem Rohr oder einem Anschlußzapfen zum Verbinden anderer Systemkomponenten und einem zweiteiligen Ring, wobei der eine Ring als Schneid- oder Klemmring und der andere Ring als Dichtelement ausgebildet ist, **dadurch gekennzeichnet, daß** das Dichtelement (6) dem Aufnahmekörper (1) zugeordnet und dem Halteelement (7) vorgelagert ist, und im montierten Zustand mit einer radial zu seiner Ringachse (9) verlaufenden Anschlagfläche (10) an der inneren Ringfläche (11) des Aufnahmekörpers (1) anliegt und sich mindestens über einen Teil der inneren Kegelfläche (2) des Aufnahmekörpers (1) erstreckt und für das Halteelement (7) eine konisch verlaufende Gleitfläche (14) und eine radial zur Rohr- oder Ringachse (9) sich erstreckende Anschlagfläche (15) aufweist, wobei das Halteelement (7) eine mit der hinteren Anschlagfläche (15) des Dichtelements (6) im fertig montierten Zustand zusammenwirkende Anschlagfläche (18) aufweist.

2. Verbindungssystem nach Anspruch 1, **dadurch gekennzeichnet**, **daß** die Gleitfläche (14) des Dichtelements (6) als Konus ausgebildet und oberflächenbehandelt ist.

3. Verbindungssystem nach Anspruch 1 oder 2, **dadurch gekennzeichnet, daß** das aus Metall bestehende Dichtelement (6) an dem Teil, der sich mindestens über einen Bereich der inneren Kegelfläche (2) des Aufnahmekörpers (1) erstreckt, eine metallische Dichtlippe (19) aufweist.

4. Verbindungssystem nach Anspruch 1 oder 2, **dadurch gekennzeichnet, daß** dem Dichtelement (6) im montierten Zustand ein Elastomerdichtring (8) vorgelagert ist.

5. Verbindungssystem nach Anspruch 4, **dadurch gekennzeichnet, daß** der Elastomerdichtring (8) mit dem Dichtelement (6) verbunden ist.

6. Verbindungssystem nach Anspruch 5, **dadurch gekennzeichnet, daß** die Verbindung zwischen dem Elastomerdichtring (8) und dem Dichtelement (6) durch Anvulkanisierung oder Klebung erfolgt.

7. Verbindungssystem nach einem der voranstehenden Ansprüche, **dadurch gekennzeichnet, daß** das Halteelement (7) als Schneidring mit zwei Schneiden, d.h. als Progressivring ausgebildet ist.

8. Verbindungssystem nach den Ansprüche 1 bis 6, **dadurch** **gekennzeichnet,** **daß** das Haltelement (7) als Zwei-Kanten-Klemmring ausgebildet ist.

9. Verbindungssystem nach einem der voranstehenden Ansprüche, **dadurch gekennzeichnet, daß** das Dichtelement (6) mit dem Halteelement (7) im Anlieferungszustand verbunden ist.

10. Verbindungssystem nach Anspruch 9, **dadurch gekennzeichnet,** **daß** die Verbindung der beiden Elemente (6,7) durch Preßpassung erfolgt.

11. Verbindungssystem nach Anspruch 9, **dadurch gekennzeichnet,** **daß** die Verbindung der beiden Elemente (6,7) durch Klebung erfolgt, wobei der Kleber ein bei der Montage freisetzbares Schmiermittel enthält.

12. Verbindungssystem nach einem der voranstehenden Ansprüche, **dadurch gekennzeichnet, daß** am Außendurchmesser des Dichtelements (6) eine durchgehende oder unterbrochene Wulst (23) aus einem vulkanisierten Elastomer aufgetragen ist.

13. Verbindungssystem nach einem der voranstehenden Ansprüche, **dadurch gekennzeichnet, daß** der zweiteilige Ring (6,7) oder das Haltelement (7) im Anlieferungszustand mit der Überwurfmutter (5) verbunden ist.

14. Verbindungssystem nach Anspruch 13, **dadurch gekennzeichnet,** **daß** das Haltelement (7) eine Verlängerung aufweist, die sich durch den Boden der Überwurfmutter (5) erstreckt und am äußeren Ende mit der Überwurfmutter z.B. mittels einer Kante 24 verklemmt ist.

15. Verbindungssystem nach Anspruch 13, **dadurch gekennzeichnet,** **daß** das Halteelement (7) mit der Mutter (5) verklebt ist, wobei der Kleber ein bei der Montage freisetzbares Schmiermittel enthält.

16. Verbindungssystem nach einem der voranstehenden Ansprüche, **dadurch gekennzeichnet, daß** nach der Fertigmontage das Dichtelement (6) vom Haltelement (7) ohne Hilfsmittel trennbar ist.

## Claims

1. A jointing system for high pressure pipe screw joints with a mating part having a standardised 24° connection, a slip-on nut for making a pressure-resistant connection, a pipe or connecting pin for joining other system components and a two-part ring, in which one ring is a cutting or clamp ring and the other ring is a sealing element, characterised in that the sealing element (6) is behind the mating part (1) and the retaining element (7) and in the assembled state lies with its abutment surface (10) running radially to its ring axis (9) against the inner ring surface (11) of the mating part (1) and extends over at least a part of the inner conical surface (2) of the mating part (1) and has a slide surface (14) running conically and a stop surface (15) extending radially to the pipe or ring axis (9), wherein the retaining element (7) has a stop surface (18) co-operating with the rear stop surface (15) of the sealing element (6) in the finished assembled state.

2. A jointing system in accordance with claim 2, characterised in that the slide surface (14) of the sealing element (6) is a cone, its upper surface having been treated.

3. A jointing system in accordance with claim 1 or 2, characterised in that the part of the metal sealing element (6) that extends along at least one section of the inner chamfered surface (2) of the mating part (1) has a metal sealing lip (19).

4. A jointing system in accordance with claim 1 or 2, characterised in that in the assembled state, the sealing element (6) has in front of it an elastomer sealing ring (8).

5. A jointing system in accordance with claim 4, characterised in that the elastomer sealing ring (8) is joined to the sealing element (6).

6. A jointing system in accordance with claim 5, characterised in that the elastomer sealing ring (8) is jointed with the sealing element (6) by vulcanisation or bonding.

7. A jointing system in accordance with one of the previous claims, characterised in that the retaining element (7) is a cutting ring with two cutters, i.e. a progressive ring.

8. A jointing system in accordance with one of claims 1 to 6, characterised in that the retaining element (7) is a double-edged clamp ring.

9. A jointing system in accordance with one of the previous claims, characterised in that the sealing element (6) is joined to the retaining element (7) when ready to be supplied onwards.

10. A jointing system in accordance with claim 9, characterised in that the two elements (6, 7) are joined by press fitting.

11. A jointing system in accordance with claim 9, characterised in that the two elements (6, 7) are joined by bonding, wherein the adhesive releases a lubricant during fitting.

12. A jointing system in accordance with one of the previous claims, characterised in that a continuous or broken pad (23) made from a vulcanised elastomer is fitted onto the outer diameter of the sealing element (6).

13. A jointing system in accordance with one of the previous claims, characterised in that the two-part ring (6, 7) or retaining element (7) is joined to the slip-on nut (5) when ready for onward supply.

14. A jointing system in accordance with claim 13, characterised in that the retaining element (7) has an extension, which protrudes through the floor of the slip-on nut (5) and is clamped to the slip-on nut, e.g. by means of an edge (24) at the outer end.

15. A jointing system in accordance with claim 13, characterised in that the retaining element (7) is bonded with the nut (5) with an adhesive that releases lubricant during fitting.

16. A jointing system in accordance with the previous claims, characterised in that once they have been fitted, the sealing element (6) and the retaining element (7) may be separated from each other without the use of additional means.

## Revendications

1. Système de liaison pour raccords vissés résistant à des très hautes pressions, avec un corps de réception normalisé présentant un raccord à 24 degrés, un écrou d'accouplement pour la réalisation d'une liaison résistant à la pression, un tube ou un raccord pour la liaison à d'autres composants de système et une bague en deux pièces, une des bagues présentant la forme d'une bague coupante ou de serrage et l'autre bague celle d'un élément d'étanchéité, caractérisé en ce que l'élément d'étanchéité (6) est associé au corps de réception (1) et est placé en avant de l'élément de maintien (7), et à l'état monté repose par une surface de butée (10) s'étendant radialement par rapport à son axe de bague (9) sur la surface annulaire intérieure (11) du corps de réception (1) et s'étend au moins sur une partie de la surface conique intérieure (2) du corps de réception (1), et présente pour l'élément de maintien (7) une surface de glissement (14) s'étendant coniquement et une surface de butée (15) s'étendant radialement par rapport à l'axe (9) du tube ou de la bague, tandis que l'élément de maintien (7) présente une surface de butée (18) qui a l'état monté coopère avec la surface de butée arrière (15) de l'élément d'étanchéité (6).

2. Système de liaison selon la revendication 1, caractérisé en ce que la surface de glissement (14) de l'élément d'étanchéité (6) présente la forme d'un cône et a subi un traitement de surface.

3. Système de liaison selon la revendication 1 ou 2, caractérisé en ce que l'élément d'étanchéité (6) réalisé en métal présente sur la partie qui s'étend au moins sur une zone de la surface conique intérieure (2) du corps de réception (1) une lèvre d'étanchéité métallique (19).

4. Système de liaison selon la revendication 1 ou 2, caractérisé en ce qu'une bagne d'étanchéité (8) en élastomère est à l'état monté placée en avant de l'élément d'étanchéité (6) .

5. Système de liaison selon la revendication 4, caractérisé en ce que la bague d'étanchéité en élastomère (8) est reliée à l'élément d'étanchéité (6).

6. Système de liaison selon la revendication 5, caractérisé en ce que la liaison entre la bague d'étanchéité en élastomère (8) et l'élément d'étanchéité (6) s'effectue par vulcanisation ou collage.

7. Système de liaison selon l'une des revendications précédentes, caractérisé en ce que l'élément de maintien (7) présente la forme d'une bague coupante à deux tranchants, c'est-à-dire une bague de compression déformable.

8. Système de liaison selon les revendications 1 à 6, caractérisé en ce que l'élément de maintien (7) présente la forme d'une bague de serrage à deux chants.

9. Système de liaison selon l'une des revendications précédentes, caractérisé en ce que l'élément d'étanchéité (6) est dans son état de livraison relié à l'élément de maintien (7).

10. Système de liaison selon la revendication 9, caractérisé en ce que la liaison des deux éléments (6, 7) s'effectue par ajustage serré.

11. Système de liaison selon la revendication 9, caractérisé en ce que la liaison des deux éléments (6, 7) s'effectue par collage, la colle contenant un agent lubrifiant libéré lors du montage.

12. Système de liaison selon l'une des revendications précédentes, caractérisé en ce que sur le diamètre extérieur de l'élément d'étanchéité (6) est appliqué un bourrelet continu ou interrompu (23) en un élastomère vulcanisé.

13. Système de liaison selon l'une des revendications précédentes, caractérisé en ce que la bague en deux pièces (6, 7) ou l'élément de maintien (7) sont à l'état de livraison reliés à l'écrou d'accouplement (5).

14. Système de liaison selon la revendication 13, caractérisé en ce que l'élément de maintien (7) présente un prolongement qui s'étend à travers le fond de l'écrou (5) et qui à son extrémité extérieure est serré par l'écrou d'accouplement, par exemple au moyen d'un chant (24).

15. Système de liaison selon la revendication 13, caractérisé en ce que l'élément de maintien (7) est collé à l'écrou (5), la colle contenant un agent lubrifiant libéré au cours du montage.

16. Système de liaison selon l'une des revendications précédentes, caractérisé en ce qu'après le montage final l'élément d'étanchéité (6) peut être séparé sans moyen auxiliaire de l'élément de maintien (7).
